# EUROPEAN PATENT APPLICATION

(11) **EP 2 816 091 A1**
(43) Date of publication of application: **24.12.2014**
(21) Application number: 14172516.8
(22) Date of filing: 16.06.2014
(51) Int. Cl.: C09J 7/02, C09J 7/04, C09J 11/02

(54) **Lightweight two-sided adhesive tape**

(30) Priority: 14.06.2013 US 201361835260 P
(71) Applicant: NITTO DENKO CORPORATION, Osaka 567 (JP)
(72) Inventor: Chen, Yu-chu, Lakewood, NJ New Jersey 08701 (US); Muta, Shigeki, Ibaraki-shi, Osaka 567-8680 (JP)
(74) Representative: Grünecker, Kinkeldey, Stockmair & Schwanhäusser

(57) **Abstract**

A lightweight two-sided adhesive tape containing a porous substrate interposed between a first adhesive layer and a second adhesive layer capable of being removed from a surface without leaving significant amounts of adhesive residue on the surface. The first adhesive layer contains one or more adhesives, and one or more powders. The second adhesive layer contains one or more adhesives, and optionally, one or more powders.

## Description

### TECHNICAL FIELD

The present invention is related to a lightweight two-sided adhesive tape. Specifically, the present invention is related to a two-sided tape comprising a porous substrate interposed between a first adhesive layer and a second adhesive layer. The first adhesive layer comprises one or more adhesives, and one or more powders. The second adhesive layer comprises one or more adhesives, and optionally, one or more powders. The content of the one or more powders in the first adhesive layer is higher than the content of the powders, if any, in the second adhesive layer. The first adhesive layer and the second adhesive layer provide different amounts adhesive strength, and thus the two-sided tape provides a differential adhesion. The first adhesive layer of the two-sided tape is capable of being removed from a surface without leaving significant amounts of adhesive residue on the surface. The second adhesive layer of the two-sided tape is optionally capable of being removed from a surface without leaving significant amounts of adhesive residue on the surface.

### BACKGROUND

Two-sided tapes are conventionally used to adhere two surfaces together by interposing the two-sided tape between the two surfaces and allowing adhesives on both sides of the two-sided tape to adhere to one of the two respective surfaces. A variety of applications use two-sided tapes. For instance, one commonly known application is the use of two-sided tapes to adhere carpet to floors. In this regard, two-sided tapes are often referred to as "carpet tapes."

In the aircraft industry, two-sided tapes are used to adhere, *inter alia,* carpet to the floors of aircraft inside the cabin of the aircraft. Conventional two-sided tapes can cause a variety of problems when adhering carpet to aircraft floors. First, conventional two-sided tapes are not necessarily lightweight, and thus conventional two-sided tapes can impart unnecessary, additional weight to an aircraft. The reduction of weight of every component in an aircraft, including tapes, is important because heavier items utilize more fuel. Thus, lightweight two-sided tapes are desirable to adhere carpet to the floors of aircraft to minimize unnecessary, additional weight in the aircraft. Similarly, lightweight two-sided tapes are generally desirable to be used throughout the transportation industry, such as, for example, in high speed trains.

Further, when removing carpet that was adhered to the floor of an aircraft with conventional two-sided tapes, a residue of the adhesives from the tape can be left behind on the floor of the aircraft. For instance, the adhesive layer of one side of the tape can delaminate from the substrate of the tape and leave a significant amount of adhesive residue on the surface to which it was adhered. If residue were only left behind on the carpet, the residue would not present such a great problem because the carpet is typically disposed of rather than reused. However, adhesive residues left on the floor of an aircraft by conventional two-sided tapes must typically be removed by technicians before new carpets are installed. Because carpets are periodically replaced in aircraft, the removal of left-over adhesive residues can result in substantial costs to the aircraft industry in terms of lost time and additional labor and materials, *inter alia.*

Moreover, solvents are often required to remove left-over adhesive residues from flooring. Thus, when removing left-over adhesive residues from the floor of an aircraft, technicians must take steps to ensure that the solvents are utilized in an environmentally acceptable manner. For example, the solvents and left-over adhesive must be disposed of correctly and sufficient health related steps must be taken to prevent inhalation of solvent fumes. Furthermore, solvents must not damage any other portions of the aircraft.

### BRIEF SUMMARY

In view of the above-mentioned exemplary problems with conventional two-sided tapes, a two-sided tape comprising a porous substrate interposed between a first adhesive layer and a second adhesive layer, wherein the first adhesive layer comprises: one or more adhesives, and one or more powders; wherein the second adhesive layer comprises: one or more adhesives, and optionally, one or more powders; and wherein the content of the one or more powders in the first adhesive layer is higher than any content of the optional powders in the second adhesive layer has been discovered.

An object of the invention is to provide a two-sided tape that demonstrates differential adhesion. In other words, "differential adhesion" means that the adhesive strength of one side of the two-sided tape is stronger than the adhesive strength of the other side of the two-sided tape. The adhesive strength can be controlled through a number of factors including, but not limited to, the content of the one or more powders in the first adhesive layer being higher than the content of any powders in the second adhesive layer and the particular adhesive used in the adhesive layers.

Because the two-sided tape demonstrates differential adhesion, the two-sided tape can be utilized to remove carpet from flooring without leaving significant amounts of adhesive residue on the flooring. For example, the adhesive layer adhered to the carpet can have a greater strength of adherence than the adhesive layer adhered to the flooring. In such a circumstance, both adhesive layers *(i.e.,* the layer adhered to the carpet and the layer adhered to the floor) would be removed together with the carpet because the adhesive would be more strongly adhered to the carpet instead of the flooring. Moreover, the adhesive layers would be strongly adhered to each other through the porous substrate thereby preventing delamination of one or more of the adhesive layers. Thus, no significant residue would remain on the flooring after the carpet was removed.

A further object of the invention is to provide a two-sided tape that maintains differential adhesion over an extended period of time. Even though carpets are replaced on aircraft periodically, the differential adhesion properties of the two-sided tape should be effective for long periods of time. That is, if the carpet is not replaced regularly in the an aircraft, the two-sided tape should maintain its improved removal properties, and thus minimize the amount of adhesive residue left on the floor of an aircraft even after an extended period of time.

A still further objection of the invention is to provide a two-sided tape that is lightweight and thus appropriate for use in an aircraft and other applications where weight of the tape is important, such as high speed trains.

An even still further object of the invention is to provide a two-sided tape that can easily be torn by hand. For example, the tape should be capable of being ripped by an individual installing carpet in an aircraft.

Even though the above-description generally discusses the application of two-sided tapes in aircraft, the two-sided tapes of the present invention can be used in any application where such two-sided tapes may be useful. For example, the two-sided tapes of the present invention could be used in the transportation and aerospace industry, and can be used in residential applications, commercial applications, elevators, stairs, artistic works, book binding, etc.

In view of the stated objects of the invention and additional objects that would be clear to one of ordinary skill in the art, the present invention includes the following aspects, *inter alia.*

A lightweight two-sided adhesive tape comprising a porous substrate interposed between a first adhesive layer and a second adhesive layer, wherein the first adhesive layer comprises:
one or more adhesives, and one or more powders; wherein the second adhesive layer comprises:
   one or more adhesives, and optionally, one or more powders; and wherein the content of the one or more powders in the first adhesive layer is higher than a content of the powders in the second adhesive layer.

The aforementioned tape, further comprising a release liner positioned on the outermost surface of the second adhesive layer.

The aforementioned tape, wherein the porous substrate is selected from the group consisting of glass cloth, paper cloth, synthetic cloth, and cotton cloth.

The aforementioned tape, wherein the porous substrate is glass cloth.

The aforementioned tape, wherein the weight of the porous substrate is less than 0.8 ounces per yard².

The aforementioned tape, wherein the adhesive strength of the second adhesive layer is greater than the adhesive strength of the first adhesive layer.

The aforementioned tape, wherein the initial adhesive strength of the first adhesive layer on stainless steel is less than 50 ounces per in, and wherein the initial adhesive strength of the second adhesive layer on stainless steel is greater than 65 ounces per in.

The aforementioned tape, wherein the one or more powders are flame retardant powders.

The aforementioned tape, wherein the flame retardant powders are halogenated flame retardant powders or phosphate flame retardant powders.

The aforementioned tape, wherein the halogenated flame retardant powders are brominated flame retardant powders.

The aforementioned tape, wherein the one or more powders is ethane-1,2-bis(pentabromophenyl).

The aforementioned tape, wherein the one or more adhesives are selected from the group consisting of natural rubber adhesives, synthetic rubber adhesives, silicone adhesives, urethane adhesives, polyester adhesives, and acrylic adhesives.

The aforementioned tape, wherein the one or more adhesives are natural rubber adhesives.

The aforementioned tape, wherein the first adhesive layer further comprises one or more tackifiers, and wherein the second adhesive layer further comprises one or more tackifiers.

The aforementioned tape, wherein the one or more tackifiers are selected from the group consisting of chlorinated olefins and xylene resins.

The aforementioned tape, wherein the weight of the tape is no more than 10 ounces per yard².

The aforementioned tape, wherein the weight of the tape is no more than 5 ounces per yard².

The aforementioned tape, wherein the weight of the tape is no more than 4.6 ounces per yard².

The aforementioned tape, wherein the first adhesive layer contains 10-30% by weight of the one or more powders.

The aforementioned tape, wherein the first adhesive layer contains 16-18% by weight of the one or more powders, and the second adhesive layer contains no powders.

The aforementioned tape, wherein the first adhesive layer contains 5-30% by weight of the one or more tackifiers, and wherein the second adhesive layer contains 5-30% by weight of the one or more tackifiers.

The aforementioned tape, wherein the first adhesive layer contains 10.5-12.5% by weight of the one or more tackifiers, and wherein the second adhesive layer contains 14-16% by weight of the one or more tackifiers.

The aforementioned tape, which is antimony free.

The aforementioned tape, wherein the first adhesive layer and the second adhesive layer have substantially the same composition except for the content of the one or more powders in the adhesive layers.

The aforementioned tape, wherein the first adhesive layer leaves substantially no residue after removal on the surface to which the first adhesive layer was adhered.

The aforementioned tape, wherein the adhesive strength of the second adhesive layer remains greater than the adhesive strength of the first adhesive layer after 5 days at a temperature of 60°C and a relative humidity of 80%.

The aforementioned tape, wherein the tape has a tear strength of 48 oz at machine direct and 87 oz at cross direction.

Still other objects and advantages of the present invention will become readily apparent by those skilled in the art from the following detailed description, wherein it is shown and described only the preferred embodiments of the invention, simply by way of illustration of the best mode contemplated of carrying out the invention. As will be realized the invention is capable of other and different embodiments, and its several details are capable of modifications in various obvious respects, without departing from the invention. Accordingly, the description is to be regarded as illustrative in nature and not as restrictive.

### BRIEF DESCRIPTION OF THE DRAWINGS

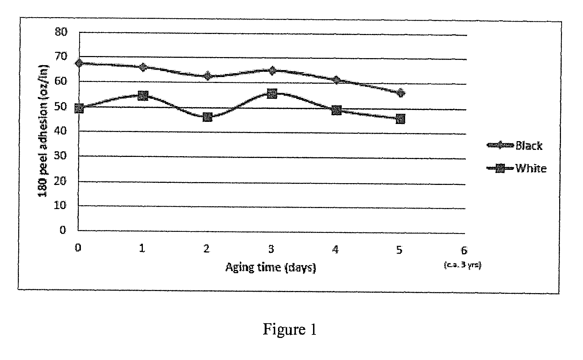

Fig. 1 is a graphical representation of the 180° peel adhesion relative to the number of days of aging.

### DETAILED DESCRIPTION

The invention will now be described by reference to the preferred embodiments. This does not intend to limit the scope of the present invention, but to exemplify the invention.

### The Porous Substrate

The two-sided tape of the present invention contains a porous substrate interposed between a first adhesive layer and a second adhesive layer. The porous substrate of the two-sided tape can be, but is not limited to, glass cloth, paper cloth, synthetic cloth, and cotton cloth. Preferably, the porous substrate is glass cloth. It is also preferred that the porous substrate is flame retardant. The porous substrate acts as, *inter alia,* a carrier for the first adhesive layer and the second adhesive layer.

In order to maintain a low weight for the two-sided tape, the porous substrate is preferably light weight. More preferably, the weight of the porous substrate is less than 1.5 ounces per yard², further preferably less than 0.8 ounces per yard².

The porous substrate preferably has a strength of between about 28 and about 150 lb/in, more preferably between about 28 and about 75 lb/in, at warp and between about 16 and about 110 lb/in, more preferably between about 16 and about 75 lb/in, at fill. More preferably, the porous substrate has a strength of at least about 45 lb/in at warp and at least about 40 lb/in, most preferably at least about 50 lb/in, at fill. The thickness of the porous substrate is preferably between about 1.0 and about 14.2 mil, more preferably between about 1.0 and about 10.1 mil. However, the thickness of the porous substrate is more preferably less than about 2.0 mil and most preferably about 1.3 mil. The weight of the porous substrate is preferably between about 0.48 and about 3.00 osy. More preferably, the weight of the porous substrate is less than about 2.0 osy. Most preferably, the weight of the porous substrate is about 0.72 osy.

The substrate of the two-sided tape must be sufficiently porous to allow the adhesive of the first adhesive layer and the second adhesive layer to mix through the porous substrate. However, the first adhesive layer and the second adhesive layer do not mix completely. Instead, the first adhesive layer and the second adhesive layer only mix near and through the porous substrate, and thus each adhesive layer has an independent formulation and properties, such as adhesive strength. However, by allowing the adhesive of the first adhesive layer and the second adhesive layer to mix, the adhesive layers bond together. Such interlayer adhesion allows for the adhesives of the first and second adhesive layers to anchor to each other through the substrate and to the substrate itself. Thus, when removing the two-sided tape from a surface, the adhesive layers do not substantially delaminate from the surface of the porous substrate. Moreover, using a porous substrate provides a larger contact area for the adhesive and the substrate, and thus the adhesive anchors better to the substrate.

In contrast, when nonporous substrates are used, the adhesive layers cannot come into contact with each other. Thus, the adhesion of the adhesive layers to the substrate is the primary force preventing the delamination of the adhesive layer. However, if the adhesive layer adheres to the surface upon which it is applied (e.g., to a floor) more strongly than the adherence to the nonporous substrate, then the adhesive layer can delaminate from the substrate upon the application of force. Accordingly, it is essential that the substrate be porous.

### The Adhesive Layers

The two-sided tape of the present invention contains a porous substrate interposed between a first adhesive layer and a second adhesive layer. The first adhesive layer and second adhesive layer can contain one or more of the same adhesives or can contain different adhesives. Examples of acceptable adhesives for use in the first adhesive layer and the second adhesive layer include natural rubber adhesives, synthetic rubber adhesives, silicone adhesives, urethane adhesives, polyester adhesives, acrylic adhesives, and mixtures thereof. Preferably, the two-sided tape employs one or more natural rubber adhesives and/or one or more acrylic adhesives. The adhesive used in the first adhesive layer and the second adhesive layer are also preferably pressure-sensitive adhesives.

The first adhesive layer preferably has a coat weight of about 1.93 to about 2.23 oz/yd². The thickness corresponding to the aforementioned coat weight of the first adhesive layer is about 1.85 to about 2.14 mil. The second adhesive layer preferably has a coat weight of about 1.67 to about 1.93 oz/yd². The thickness corresponding to the aforementioned coat weight of the second adhesive layer is about 2.02 to 2.33 mil. If the thickness of the first adhesive layer and the second adhesive layer are the same, the adhesion of the two layers will still be different due to, for example, the nature of the adhesive formulation.

The adhesives in the first and second adhesive layers may further contain one or more additives such as a tackifier (a tackifying resin), a powder, a solvent, a thickener, a thixotropic agent, a bulking agent, a filler, a plasticizer, an antiaging agent, an antioxidant, a colorant (a pigment, a dye, etc.), a flame retardant, a surfactant and a crosslinking agent.

Tackifiers are chemical compounds added to an adhesive to increase the "tack" or stickiness of an adhesive. The specific tackifier used according to the instant invention is not limited as long as the tackifier is compatible with the other components of the first and second adhesive layers. Examples of acceptable tackifiers include chlorinated olefms, xylene resins, synthetic petroleum resins, terpene resins, terpene phenol resins, aromatic modified terpene resins, cumarone-indene resin, natural resin rosin, modified rosin, glycerol ester rosin, pentaerythritol ester rosin, allylphenol formaldehyde resins, xylene formaldehyde resins, alicyclic petroleum resins, styrene resins, dicyclopentadiene resins, and mixtures thereof. Preferably, tackifiers such as Nikanol H80 and Paroil 63NR are used. Nikanol H80 is a commercially available tackifier produced by Fudow Co., Ltd. Paroil 63NR is a commercially available tackifier produced by Dover Chemical Corporation.

The content of the tackifier in the first and second adhesive layers is determined, for example, based upon properties of the particular tackifier employed, the properties of the adhesive to which the tackifier is added, etc. However, the first and second adhesive layers preferably contain 5-30% by weight of the one or more tackifiers, respectively. More preferably, the first and second adhesive layers preferably contain 7-20% by weight of the one or more tackifiers, respectively. Most preferably, the first adhesive contains 10.5-12.5% by weight of the one or more tackifiers and the second adhesive layer contains 14-16% by weight of the one or more tackifiers.

The two-sided tape of the present invention further contains a first adhesive layer that contains one or more powders and a second adhesive layer that optionally contains one or more powders. Thus, the first adhesive layer and the second adhesive layer have substantially the same composition except for the content of the one or more powders in the adhesive layers.

The powders used in the first and second adhesive layers can be the same or different. The specific powders used according to the instant invention are not limited as long as the powders are compatible with the other components of the first and second adhesive layers. However, it is preferred that the powders used in the two-sided tape are flame retardant powders. Examples of acceptable flame retardant powders include halogenated flame retardant powders, brominated flame retardant powders, chlorinated flame retardant powders, phosphate flame retardant powders, antimony flame retardant powders, and mixtures thereof. However, the two-sided tape is preferably antimony-free. More preferably, the flame retardant powders are halogenated flame retardant powders or phosphate flame retardant powders. Most preferably, the flame retardant powders are brominated flame retardant powders. An example of an acceptable brominated flame retardant powder is Saytex 8010ZD produced by Albemarle.

The content of the powders used in the first and second adhesive layers is determined, for example, based upon desired adhesive strength of the first and second adhesive layers. The addition of powders to the first and the second adhesive layers acts to reduce the adhesive strength of the adhesive in the first and the second adhesive layers. In this regard, the content of the one or more powders in the first adhesive layer must be higher than the content of the powders in the second adhesive layer. Preferably, the first adhesive layer contains 10-30% by weight of the one or more powders. More preferably, the first adhesive layer contains 16-18% by weight of the one or more powders. Preferably, the second adhesive layer does not contain any powder.

The adhesive strength of the second adhesive layer is greater than the adhesive strength of the first adhesive layer. The adhesive strength of the second adhesive layer is stronger because the second adhesive layer only optionally contains powders. Even if the second layer does, in fact, contain powders, the content of the one or more powders in the first adhesive layer is higher than the content of the powders in the second adhesive layer. The presence of one or more powders reduces the adhesion of the adhesive layers. So, the adhesive layer containing a higher percentage powder will have a lesser adhesive strength when compared to the adhesive layer containing, if at all, a lower percentage of powder. It is preferable that the initial adhesive strength of the first adhesive layer on stainless steel is less than 50 ounces per inch and the initial adhesive strength of the second adhesive layer on stainless steel is greater than 65 ounces per inch. However, the particular differential adhesion between the first and second adhesive layers will depend on the particular adhesive, powder, and additional components utilized in the two-sided tape.

The two-sided tape of the present invention may further contain one or more release liners. The release liner is preferably positioned on the outermost surface of the second adhesive layer. Such a position of the release liner allows the two-sided tape to be rolled into tape roll for easy handling. However, the release liner may also be positioned on both the outermost surface of the first adhesive layer and the outermost surface of the second adhesive layer. By positioning the release liner on both the outermost surface of the first adhesive layer and the outermost surface of the second adhesive layer, the two-sided tape can be easily handled as a sheet having varying widths rather than a roll.

The weight of the two-sided tape should be minimized to the extent possible. Preferably, the weight of the tape is no more than 10 ounces per yard². More preferably, the weight of the tape is no more than 5 ounces per yard². Most preferably, the weight of the tape is no more than 4.6 ounces per yard².

The two-sided tape of the present invention leaves substantially no residue after removal on the surface to which the first adhesive layer was adhered. For instance, the first adhesive layer will typically be adhered to the floor; whereas, the second adhesive layer will typically be adhered to the carpet. When the carpet is pulled away from the flooring, the stronger adhesive strength of the second adhesive layer on the carpet prevents the two-sided tape from remaining adhered to the floor. Instead, the tape will remain adhered to the carpet and thus will be removed together with the carpet. Furthermore, because the adhesive layers and porous substrate are strongly bonded together, delamination does not substantially occur. Thus, substantially no adhesive residue is left behind on the floor.

The two-sided tape of the present invention is preferably capable of being torn by hand. In this regard, the two-sided tape of the present invention preferably has a tear strength of 48 ounce force at machine direction and 87 ounce force at cross direction

### Examples

The following non-limiting examples are presented to further illustrate the present invention.

### Example 1: Formulation

A two-sided tape according to the present invention was made using the following formulation, set forth in Table 1, for the first and second adhesive layers on the two-sided tape. The "white adhesive" contains flame retardant powders, and thus corresponds to the first adhesive layer. The "black adhesive" does not contain such a powder, and thus corresponds to the second adhesive layer.

**Table 1**

| **White adhesive** | | **Black Adhesive** | |
|---|---|---|---|
| Rubber-based Adhesive | 74.6 | Rubber-based Adhesive | 87.42 |
| Flame Retardant Powders | 17.91 | Carbon Black Ink | 2.58 |
| Plasticizer | 7.5 | Plasticizer | 10 |
| Solid Content | 50.12% | Solid Content | 41.56% |

In the above formulation, glass cloth was utilized as a substrate. The glass cloth that was utilized had a weight of 0.74 oz/yd². The total weight of the "white adhesive" in Table 1 was 2.08 oz/yd². The total weight of the "black adhesive" in Table 1 was 1.08 oz/yd². The total weight of the two-sided tape was 4.6 oz/yd².

### Example 2: Aging Study

The two-sided tape set forth in Example 1 was subjected to aging studies to determine the adhesive strength of the two-sided tape over time. In this regard, the "white adhesive" and the "black adhesive" were subjected to aging conditions of 66°C and 80% RH. The adhesive strength of the "white adhesive" and the "black adhesive" were measured in terms of 180° peel strength on a stainless steel surface. Table 2 and Table 3 provide the adhesive strength over a period of 5 days. Each day in "aging time" corresponds to approximately one year of natural aging of pressure-sensitive tapes according to ASTM D 3611-89, which is the Standard Practice for Accelerated Aging of Pressure-Sensitive Tapes. Table 2 provides the adhesive strength data for the "black adhesive." Table 3 provides the adhesive strength data for the "white adhesive" (*i.e*., the adhesive containing the powder).

**Table 2**

| | **Black Adhesive Layer** | | | | | |
|---|---|---|---|---|---|---|
| Aging time (days) | 0 | 1 | 2 | 3 | 4 | 5 |
| Adhesion (oz/in) | 68.8 | 64.15 | 64.71 | 65.43 | 56.72 | 58.18 |
| | 68.66 | 67.86 | 62.63 | 70.06 | 62.38 | 55.85 |
| | 64.45 | 65.8 | 60.53 | 59.39 | 65.23 | 55.28 |
| Average (oz/in) | 67.3 | 65.94 | 62.62 | 64.96 | 61.44 | 56.44 |

**Table 3**

| | **White Adhesive Layer** | | | | | |
|---|---|---|---|---|---|---|
| Aging time (days) | 0 | 1 | 2 | 3 | 4 | 5 |
| Adhesion (oz/in) | 49.59 | 55.33 | 34.61 | 60.98 | 47.44 | 44.07 |
| | 48.85 | 54.66 | 60.49 | 48.84 | 44.65 | 50.38 |
| | 49.51 | 53.36 | 43.3 | 57.87 | 55.64 | 43 |
| Average (oz/in) | 49.32 | 54.45 | 46.13 | 55.9 | 49.24 | 45.82 |

Tables 2 and 3 both show that, over the aging time, the adhesion strength only slightly diminishes. However, the tape maintains a substantial differential adhesion over the period of aging. Moreover, the adhesive strength after 5 days of aging is sufficient for adhering, for example, carpet to floors. Fig. 1 provides a graphical representation of the trend of adhesive strength over time.

### Example 3: Comparative Example

A two-sided tape of the present invention was compared to known two-sided tapes to compare the adhesive-residue left behind on a surface after the tapes were removed. In the experiment, the two-sided tape of the present invention utilized a glass cloth substrate and natural rubber as the adhesive on both side of the substrate. Berry Plastics Polyken 1111 and Orcon OT-40 were used as comparative known two-sided tapes. Berry Plastics Polyken 1111 uses a polyethylene terephthalate ("PET") substrate, and has an acrylic adhesive on one side of the substrate and a styrene-butadiene rubber adhesive on the other side of the substrate. Orcon OT-40 uses a PET substrate, and has an acrylic adhesive on both sides of the substrate.

Each of the aforementioned two-sided tapes was applied between a carpet and a honeycomb floor panel. The two-sided tapes were then subjected to accelerated aging conditions of 160°F and 85% humidity for 5 days. Subsequently, the carpet was removed from the honeycomb floor panel and visual observations concerning the residue left on the honeycomb floor panel were made. Both the Berry Plastics Polyken 1111 and Orcon OT-40 left adhesive residue on the honeycomb floor panel. The adhesive residue left from the Berry Plastics Polyken 1111 and Orcon OT-40 were the result of delamination of the adhesive layer in those tapes. In contrast, the two-sided tape of the present invention left no visible residue and the adhesive layers of the two-sided tape of the present invention did not delaminate from the substrate.

### Example 4

Tapes were made, as in Example 1, except that the glass cloth used as a substrate in Example 1 were replaced with the substrates set forth in Table 4. Each of the tapes was applied to a honeycomb floor panel. The two-sided tapes were then subjected to accelerated aging conditions of 66°C and 80% humidity for 3 days. Subsequently, the tapes were removed from the honeycomb floor panel and visual observations concerning the residue left on the honeycomb floor panel were made. The result is that each of the tapes left no visible residue and the adhesive layers of the tapes did not delaminate. Tapes used "Glass cloth-5" or "non-woven cloth" did not break even when the tapes were removed at 180 deg.

**Table 4**

| Substrate | Cloth thickness (mil) | Cloth weight (oz/yard²) | Ends (counts/in) | Picks (counts/in) | Cloth tensile(MD) (lb) | Cloth tensile(TD) (lb) |
|---|---|---|---|---|---|---|
| Glass cloth-1 | 1.3 | 0.72 | 56 | 56 | 45 | 50 |
| Glass cloth-2 | 1.5 | 0.94 | 66 | 57 | 70 | 70.5 |
| Glass cloth-3 | 2.9 | 1.07 | 50 | 30 | 83 | 53 |
| Glass cloth-4 | 2.2 | 1.43 | 60.5 | 46 | 113 | 71 |
| Glass cloth-5 | 2 | 1.44 | 60.5 | 46 | 150 | 110 |
| Non-woven cloth(paper cloth) | 3.0 | 0.67 | - | - | 3.35 | 3.35 |

### Example 5

Tapes were made, as in Example 1, except that SIS rubber-based adhesive or cis-polyisoprene rubber-based adhesive was used as the rubber-based adhesive in the white adhesive. Each of the tapes was applied to a honeycomb floor panel. The two-sided tapes were then subjected to accelerated aging conditions of 66°C and 80% humidity for 3 days. Subsequently, the tapes were removed from the honeycomb floor panel and visual observations concerning the residue left on the honeycomb floor panel were made. The result was that each of the tapes left no visible residue and the adhesive layers of the tapes did not delaminate. Tapes that used cis-polyisoprene as the rubber-based adhesive did not break even when the tape was removed at 180 deg.

The foregoing description of the invention illustrates and describes the present invention. Additionally, the disclosure shows and describes only the preferred embodiments of the invention but, as mentioned above, it is to be understood that the invention is capable of use in various other combinations, modifications, and environments and is capable of changes or modifications within the scope of the inventive concept as expressed herein, commensurate with the above teachings and/or the skill or knowledge of the relevant art. The embodiments described hereinabove are further intended to explain best modes known of practicing the invention and to enable others skilled in the art to utilize the invention in such, or other, embodiments and with the various modifications required by the particular applications or uses of the invention. Accordingly, the description is not intended to limit the invention to the form disclosed herein. Also, it is intended that the appended claims be construed to include alternative embodiments.

## Claims

1. A lightweight two-sided adhesive tape comprising a porous substrate interposed between a first adhesive layer and a second adhesive layer,
wherein the first adhesive layer comprises:
one or more adhesives, and
one or more powders;
wherein the second adhesive layer comprises:
one or more adhesives, and
optionally, one or more powders; and
wherein the content of the one or more powders in the first adhesive layer is higher than the content of the optional powders in the second adhesive layer.

2. The lightweight two-sided adhesive tape of claim 1, further comprising a release liner positioned on the outermost surface of the second adhesive layer.

3. The lightweight two-sided adhesive tape of claim 1, wherein the porous substrate is selected from the group consisting of glass cloth, paper cloth, synthetic cloth, and cotton cloth.

4. The lightweight two-sided adhesive tape of claim 3, wherein the porous substrate is glass cloth.

5. The lightweight two-sided adhesive tape of claim 1, wherein the weight of the porous substrate is less than 0.8 ounces per yard².

6. The lightweight two-sided adhesive tape of claim 1, wherein the adhesive strength of the second adhesive layer is greater than the adhesive strength of the first adhesive layer.

7. The lightweight two-sided adhesive tape of claim 6,
wherein the initial adhesive strength of the first adhesive layer on stainless steel is less than 50 ounces per in, and
wherein the initial adhesive strength of the second adhesive layer on stainless steel is greater than 65 ounces per in.

8. The lightweight two-sided adhesive tape of claim 1, wherein the one or more powders are flame retardant powders.

9. The lightweight two-sided adhesive tape of claim 8, wherein the flame retardant powders are halogenated flame retardant powders or phosphate flame retardant powders.

10. The lightweight two-sided adhesive tape of claim 8, wherein the one or more powders are brominated flame retardant powders.

11. The lightweight two-sided adhesive tape of claim 1, wherein the one or more adhesives are selected from the group consisting of natural rubber adhesives, synthetic rubber adhesives, silicone adhesives, urethane adhesives, polyester adhesives, and acrylic adhesives.

12. The lightweight two-sided adhesive tape of claim 11, wherein the one or more adhesives are natural rubber adhesives.

13. The lightweight two-sided adhesive tape of claim 1,
wherein the first adhesive layer further comprises one or more tackifiers, and
wherein the second adhesive layer further comprises one or more tackifiers.

14. The lightweight two-sided adhesive tape of claim 13, wherein the one or more tackifiers are chlorinated olefins and xylene resins.

15. The lightweight two-sided adhesive tape of claim 1, wherein the weight of the tape is no more than 10 ounces per yard².
